# EUROPEAN PATENT SPECIFICATION

(11) **EP 1 896 239 B1**
(45) Date of publication and mention of the grant of the patent: **07.11.2018**
(21) Application number: 05753548.6
(22) Date of filing: 27.06.2005
(51) Int. Cl.: B29C 33/38, B29C 53/08, B29C 53/84, H04R 25/00, B29C 64/153, B29C 64/135, B29L 31/00, B33Y 80/00

(54) **A METHOD AND A TOOL FOR SHAPING AN ELONGATED DEFORMABLE MEMBER FOR A HEARING AID**
VERFAHREN UND WERKZEUG ZUM FORMEN EINES LÄNGLICHEN VERFORMBAREN GLIEDS FÜR EINE HÖRHILFE
METHODE ET OUTIL DE MISE EN FORME D UNE PIECE ALLONGEE DEFORMABLE DESTINEE A UNE PROTHESE AUDITIVE

(43) Date of publication of application: 12.03.2008
(73) Proprietor: WIDEX A/S, 3540 Lynge (DK)
(72) Inventor: OLSEN, Jørgen, Mejner, DK-2750 Ballerup (DK); TØPHOLM, Jan, DK-3400 Hillerød (DK); ESPERSEN, Christian, Bohl, DK-3480 Fredensborg (DK)
(74) Representative: AWA Denmark A/S
(86) International application number: PCT/DK2005/000430
(87) International publication number: WO 2007/000160

(56) References cited:
- EP-A- 1 246 506
- EP-A- 1 448 014
- EP-A- 1 626 610
- WO-A-99/04601
- CA-A1- 930 636
- DE-A1- 3 939 352
- DE-A1- 10 238 597
- FR-A- 2 518 014
- US-A- 5 641 448
- US-A1- 2002 172 386
- US-A1- 2004 104 512
- US-B1- 6 540 045
- PATENT ABSTRACTS OF JAPAN vol. 014, no. 181 (M-0961), 11 April 1990 (1990-04-11) & JP 02 032831 A (USUI INTERNATL IND CO LTD; others: 01), 2 February 1990 (1990-02-02)

## Description

The present invention relates to a method and a tool for shaping an elongated deformable member for a hearing aid, as well as to a method for manufacturing such a tool.

BTE-type hearing aids generally have a hearing aid housing comprising a hard shell in which all of the electronics, including input and output transducers, of the hearing aid are typically located. The hard shell is worn Behind The Ear, hence the abbreviation BTE. If the output transducer is located in the hearing aid housing, the output sound from the hearing aid is conducted via a sound tube to an earplug placed in an ear of the person wearing the hearing aid. Both the sound tube and the earplug constitute replaceable parts, which can be, and normally are, replaced with regular intervals. The sound tube is typically replaced less frequently than the earplug, because it is less prone to be soiled, e.g. by cerumen.

The sound tube has to have a three dimensional curvature in order to allow the sound tube to fit the hearing aid at its first end whilst allowing the other end, to which the ear plug is attached, to point in a direction into the ear canal together with the ear plug.

In order to attach the first and second ends of the sound tube to the hearing aid and earplug, respectively, both ends are provided with connection means. These connection means are normally provided by insert moulding around the respective ends of a length of tube. The tube is normally prefabricated in long lengths in a continuous process such as extrusion, and the desired length of tube is cut from this long length. The actual length of the desired length of tube depends on the user for which the resulting sound tube is desired. Even though the actual length of the desired length of tube depends on the user, usually only a few standard lengths are used, e.g. three. This is sufficient because differences in the individual needs, may be compensated by an appropriate choice of curvature of the sound tube.

In particular when using soft earplugs, the sound tube has to have a stable form, maintaining more or less a predefined curvature from the hearing aid to the earplug by itself, thereby aiding in the positioning of the earplug.

Because the length of tube, on which the connection means are placed by insert moulding, is cut from a longer length of tube, it will *per se* not have the right three-dimensional curvature to suit the user. Rather, to the extent that the length of tube is not straight, it will typically have a two-dimensional curvature reflecting the fact that it was delivered as a coil of tube.

WO 99 04601 A1 discloses a tool suitable for shaping an elongated deformable member according to the preamble of claim 1.

CA 930636 discloses a mould for shaping catheters for coronary arteriography.

On this background it is the object of the present invention to provide a method and a tool for shaping an elongated member, such as or comprising a sound tube for a hearing aid.

According to a first aspect of the present invention this object is achieved by a tool according to claim 1.

By the use of a rapid prototyping process it is achieved that the elongated member may be shaped individually to the individual characteristics of the ear of the actual user to use the elongated member in connection with e.g. a BTE hearing aid. By this individual shaping, the elongated member may be made to lie closer to the ear, and thus be less conspicuous. Moreover, in addition to the individual shaping of the elongated member to be less conspicuous, the use of a rapid prototyping process allows the tool to be individually shaped, in order to impart the elongated member a curvature that takes up any excessive length not needed. Thus only a few specific standard lengths of elongated members, e.g. three, need to be kept in stock.

According to a second aspect of the invention, there is provided a method for providing a tool according to any of claims 1 to 8. According to a third aspect of the invention, the object is achieved by a method for shaping a deformable elongated member for a hearing aid, according to claim 14.

Thereby it is achieved that the sound tube can be held in a position with a desired curvature for a time long enough for it to set in a desired shape corresponding to this curvature and maintain this shape after cooling.

According to a preferred embodiment of the first aspect of the invention, the tool is made of a plastic material. Plastic is inexpensive, and since the invention does not involve any high temperatures, it has sufficient durability. Moreover, using a plastic material is preferable in that it allows the use of rapid prototyping processes such as stereolithography or selective laser sintering.

Thus, according to a further preferred embodiment, the rapid prototyping process is a stereolithography process. The stereolithography process is itself advantageous in that a high degree of precision in the manufacture of the tool may be achieved. Preferred materials for this are plastic materials selected from the group comprising acryl and epoxy, but in principle any material typically used in this process may be used. If fine details of the tool are needed, epoxy would be preferred.

However, according to another preferred embodiment, the rapid prototyping process is a selective laser sintering process. Compared to stereolithography, selective laser sintering allows the tools to be made more durable. Currently it is preferred to use a plastic material such as a polyamide, but also metals, such as aluminium, or even ceramics could be used.

According to an especially preferred embodiment of the invention, the tool is manufactured on the basis of recorded data concerning an individual's ear. Having once recorded the data concerning the individual's ear, the method according to the invention allows any number of tools to be manufactured, be it locally at the audiologist's, in a remote manufacturing plant, or any other appropriate place without need for sending any physical models. Instead, the data may simply be transmitted over a computer network.

In another embodiment the tool is adapted to shape an elongated object having a predetermined length. This adaptation is facilitated by the use of a rapid prototyping process, and allows a limited number of elongated elements to be kept in stock.

Thus, according to a further embodiment the tool is adapted to shape an elongated object having a length selected among a number of predetermined lengths, said number being larger than one and preferably smaller than four. Thus the number of elongated is very limited, e.g. to three, bearing in mind that the elongated elements may be shaped to fit either the right ear or the left ear. The tool according to the present invention is convenient for shaping the elongated member, but may have a rather complex shape. However, even though the maximum dimensions of the tool will only be a few centimetres, e.g. 4 to 7 centimeters, and has a complex geometry, which is demanding regarding precision, the inventors have realized that the tool is suitable for manufacture using a rapid prototyping process. Thus, despite the small dimensions, the invention nonetheless renders itself for manufacture using a rapid prototyping method.

According to an embodiment which does not form part of the present invention, said first holding means comprises means for securing said first end of said elongated member against motion in a direction towards the second end along the longitudinal axis of the elongated member. This is advantageous because during the placing of the elongated member in the tool a pull will be exerted on the elongated member in order to obtain the desired shape.

According to the invention, the first holding means comprises means for securing said first end of said elongated member against unwanted rotation about the longitudinal axis of the elongated member. This allows one end of the elongated member to be held in place in the tool while the rest of the elongated member is twisted into an overall three dimensional shape.

According to yet a further embodiment, which does not form part of the present invention, said second holding means comprises means for securing said second end of said elongated member against motion in a direction towards the first end along the longitudinal axis of the elongated member. Thereby it is achieved that both ends of the elongated member are fixed in the positions necessary for matching at one end the housing of the hearing aid when it is attached thereto, whilst the other end is in the correct position with respect to the ear canal.

According to another embodiment which does not form part of the invention, said tool further comprises a third holding means for holding an auxiliary part of said elongated member in a predetermined position. This allows the normally straight auxiliary part to be given a predetermined shape indicating to the user how it should later be formed into a loop. In particular, the third holding means may comprise a curved groove, in which the straight auxiliary part may be placed.

In a preferred embodiment which does not form part of the present invention, the tool further comprises means for securing said auxiliary part in said groove, in particular said means for securing said auxiliary part may comprise a protrusion projecting laterally into said groove from a side wall thereof.

According to the invention, said positioning means comprises at least one protrusion. This allows the elongated member to be wrapped around the protrusions into the desired shape between the holding means at either end of the elongated member.

In particular said protrusion may undercut, so as to provide a groove for receiving said elongated member. This secures the twisted and bent elongated member laterally, thus aiding in holding the elongated member in the desired position and shape.

In a preferred embodiment of the method according to the invention, said rapid prototyping process is a stereolithography process. As mentioned already, the stereolithography process is precise, and relies on inexpensive materials, in particular a plastic material selected from the group comprising acryl and epoxy.

In an alternative, but also preferred embodiment, said rapid prototyping process is a selective laser sintering process. Compared to stereolithography, selective laser sintering allows the tools to be made more durable. Currently it is preferred to use a plastic material such as a polyamide, but also a metal, such as aluminium, or even a ceramic could be used.

In an especially preferred embodiment of the method according to the invention, said rapid prototyping process involves the use of pre-recorded data about an individual's ear. This allows the individual shaping of the tool to produce an individually shaped elongated element, in particular comprising a sound tube, for the wearer.

According to a further preferred embodiment of the method, the pre-recorded data about the individual's ear are obtained by laser scanning of the ear. This allows a quick and clean establishment of the data, rather than having to involve a cast of the ear.

According to yet another preferred embodiment the data obtained by the laser scanning is transmitted online to a manufacturing facility remote from the location where the scanning takes place. This allows the shaping tools to be manufactured centrally. They may then either be shipped to the audiologist in order for him to use them for shaping the elongated members whenever the user is in need for new ones. Alternatively, the elongated members could also be shaped to the user's individual needs at the central facility, and then be shipped to the audiologist or even directly to the user.

According to a further embodiment, the method further comprises the steps of providing a tool having a first holding means for a first end of the elongated member, a second holding means for holding a second end of the elongated member, and means for positioning and holding intermediate parts of said elongated member between said first end and said second end in a fixed desired shape, placing the first end of the elongated member in the first holding means, placing the intermediate parts of said elongated member in said positioning means for holding the intermediate parts of said elongated member, placing the second end of the tube in the second holding means, heating said elongated member, cooling said elongated member, and removing said elongated member from the tool. Using such a tool not only simplifies the placement of the elongated deformable member in the right position and the right curvature, but also allows this to be done on an individual basis, because the tool may be readily made for a specific individual's needs.

According to a further preferred embodiment, which does not form part of the present invention, said elongated member is twisted by an angle after said first end thereof has been placed in said first holding means but before said second end has been placed in said second holding means. This allows the elongated member to be manufactured in a simple way using an insert moulding technique.

According to another embodiment which does not form part of the present invention, said positioning means comprises a protrusion and the intermediate parts of said elongated member are placed therein by wrapping them at least partially said elongated member around said protrusion. This facilitates the positioning of the elongated member in the tool, whilst at the same time allowing the tool to be made of one single piece without any hinged or otherwise movable parts. This again lends itself to the use of a rapid prototyping method for the manufacture thereof.

According to yet a further embodiment which does not from part of the invention, the method further comprises the step of placing an auxiliary part of said elongated member in a third holding means in said tool. By means of this, the auxiliary part may be given a predetermined curvature indicating to the user how it is going to be used.

In a further embodiment which does not form part of the present invention, the elongated member is heated to a temperature of between approximately 90°C and 120°C. This has been found to be an appropriate temperature to allow the deformable elongated member to set in the predetermined shape, without having to wait too long.

In an other embodiment which does not form part of the present invention, the elongated member is heated in boiling water at atmospheric pressure. Using boiling water is under normal atmospheric pressures an easy way of controlling the temperature, so as to ensure that it is in the above temperature interval. The deformable elongated member can comprise a tube.

The invention will now be described in greater detail based on non-limiting exemplary embodiments of the invention illustrated in the drawings. In the drawings,
fig. 1 shows a BTE hearing aid with an elongated member comprising a sound tube shaped according to the invention,
figs. 2a and 2b, respectively, show the elongated member before and after it is shaped, and
figs. 3a to 3f show a tool according to the invention for shaping an elongated member for a hearing aid.

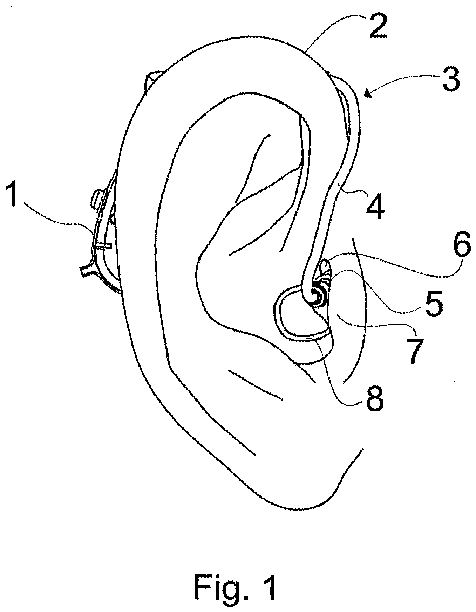

Fig. 1 shows a BTE hearing aid, with the hearing aid housing 1 placed behind an ear 2 of a user. An elongated member 3 comprising a sound tube 4 conducts sound from an output transducer in the hearing aid housing 1 to an earplug 5 attached to the distal end of the elongated member 3 and inserted in the ear canal 6 of the user. The earplug 5 is held in place behind tragus 7, by means of an adjustable loop formed by means of an auxiliary part in the form of a strip 8.

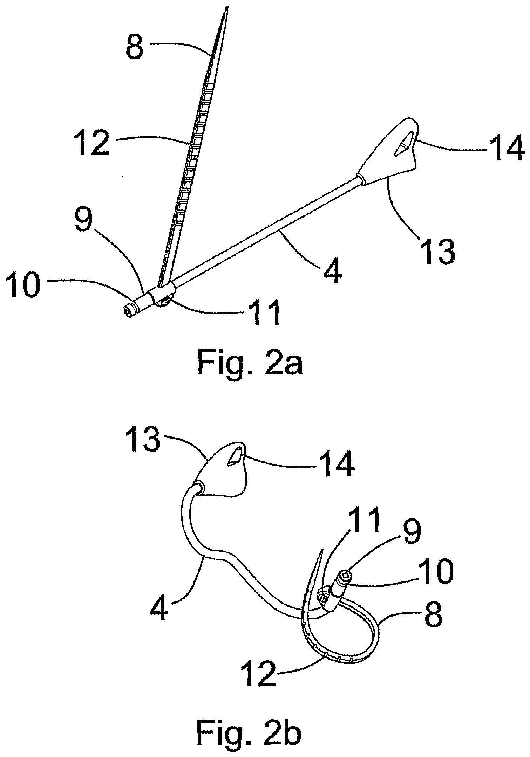

In fig. 2a, the elongated member 3 is shown in an initial straight condition. The elongated member 3 may have a slight curvature (not shown), stemming from the fact that this part of the elongated member, which is typically a single-lumen sound tube 4, is manufactured in a separate process, such as extrusion and cut into a suitable length. Typically the sound tube 4 is made of a transparent plastic material, such as a polyamide type plastic, in order not to make it too conspicuous. Because the sound tube 4 is produced in longer lengths, it will typically be delivered as a coil, and may thus have set with a slight curvature over time at storage temperature.

In the following description it will be assumed that the elongated element comprises a single-lumen sound tube 4, but all considerations would apply equally to multi-lumen sound tubes, or elongated elements comprising electrical conductors.

In the manufacturing process, an appropriate length of sound tube 4 is cut form the longer lengths delivered. Typically only three different lengths are used, because one of these would fit most people's ears. It is currently preferred to use three lengths of tube for adults, namely approximately 52 mm, 56 mm and 59 mm. This length of sound tube 4 is provided with appropriate attachment means 9, 13 for attaching the resulting elongated member 3 comprising the sound tube 4 to an earplug 6 and the hearing aid 1, respectively.

Thus, in the illustrated example one end of the sound tube 4 is provided with a cylindrical earplug attachment means 9, comprising a circumferential recess 10. The earplug attachment means 9 may further comprise the strip 8 and an eyelet 11 for receiving and retaining the strip 8, by means of a number of recesses 12 therein. The strip 8 has recesses 12 on either side thereof allowing it to be inserted and retained in the eyelet 11 from either side thereof, depending on whether the elongated member 3 is to be used with a left or a right ear. Thus, the arrangement of the earplug attachment means 9 and the parts it comprises is generally symmetrical about a plane (not indicated). The other end of the sound tube 4 is provided with hearing aid attachment means 13. The hearing aid attachment means 13, comprises a through passage 14, not intersecting the lumen of the sound tube 4. The cross section of the hearing aid attachment means 13 is slightly oval in order to match the hearing aid housing 1 and make a smooth and aesthetic transition to the sound tube 4. The shape of the oval cross section is so that it generally extends in the direction of the above-mentioned plane, and is symmetrical about this plane.

The reason that the shape of the oval and the strip 8 generally extend in the same plane is because both of the attachment means 9, 13 are normally provided around the ends of the sound tube 4 by means of a single insert moulding process. In this insert moulding process it is convenient to place the longer dimensions along the plane separating two halves of the mould. The attachment means 9, 13 formed in this insert moulding process may also typically be made of a polyamide type plastic, differing, however, from that of which the sound tube 4 is made.

From the generally straight and two-dimensional condition shown in fig. 2a, the deformable elongated object 3 has to be given a three-dimensional shape, e.g. as shown in fig. 2b. The shape of the elongated member 3 shown in fig. 2b is suitable for the right ear, as illustrated in fig. 1. Since, however, the elongated member is symmetrical in the initial condition shown in fig. 2a it might just as well have been shaped to fit a left ear. Moreover, the shape illustrated in fig. 1 and 2b is only an example, the actual shape would depend on the individual user, in order to allow parts of the elongated member to lie as close as possible to the head of the user, and disappear as soon as possible behind pinna.

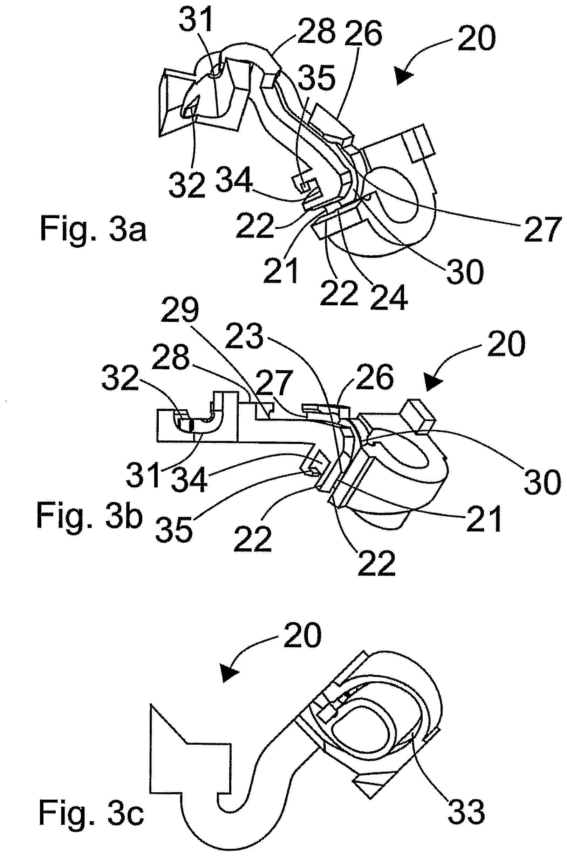

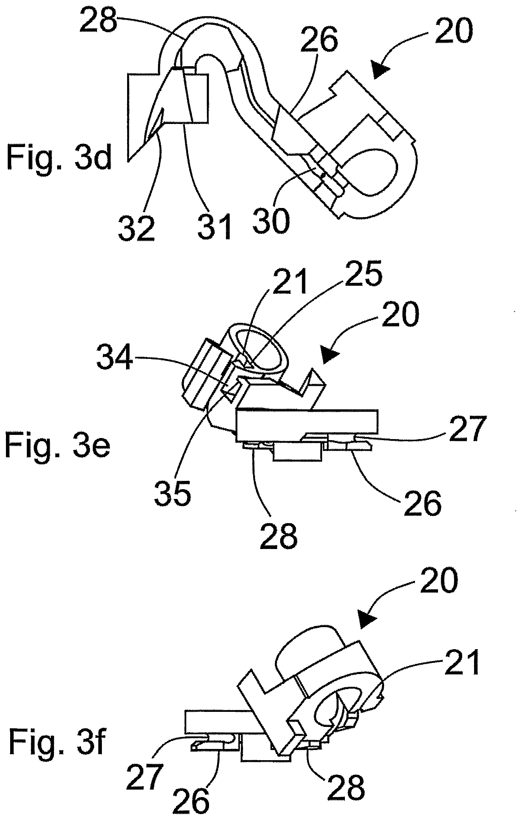

For this, a tool 20 according to the invention is made. In figs. 3a to 3f, an exemplary tool 20 corresponding to the shape of the elongated member 3 illustrated in fig. 2b, is shown. The inventors have realised that for the specific purpose of shaping the elongated member 3 of a hearing aid, a tool 20 manufactured in a rapid prototyping process has sufficient strength and durability, even if the rapid prototyping process is one, such as stereolithography or selective laser sintering, using a plastic material. The tool 20 is thus manufactured using a rapid prototyping process. Apart from those mentioned above, a number of different rapid prototyping processes, with which the tool 20 according to the invention may be manufactured, exist. It is, however, currently preferred to use stereolithography because it has a high degree of precision, but selective laser sintering could also be used. Typical materials, which may be used for stereolithography in this context, are acryl and epoxy. For selective laser sintering, a polyamide could be used.

Using the rapid prototyping processes mentioned above allows a tool 20 to be manufactured specifically to shape the elongated member 3 to a fit matching exactly the specific dimensions and shapes of an individual's ear 2. Thus, the elongated members 3 may be shaped in such a way that their appearance is as discrete as possible when placed in the user's ear 2.

For this the necessary data regarding the user's ear is recorded. This may be done directly by laser scanning of the user's ear 2, or it may be done indirectly based on a cast of the user's ear 2, which is then scanned.

This laser scanning may be performed directly at the audiologist's or it may be done remotely in a production facility. If done at the audiologist's, the resulting data about the user's ear 2 may be transmitted to a remote production facility where the tool 20 is produced by means of said rapid prototyping process, based on said data. The tool 20, or several copies thereof, may then be shipped back to the audiologist's in order to allow him to shape elongated members 3 for the user upon his request. Alternatively, the audiologist may order a number of shaped elongated members 3 from a supplier, who would shape them with the tool 20 produced in the remote production facility.

Irrespective of where said shaping of the elongated member 3 takes place, the elongated member 3 would be placed in the tool 20, heated and cooled in order to obtain the desired, predetermined shape, and then removed from the tool 20, which may then be reused. In order to obtain the desired shape, the elongated member 3 will normally be heated in an oven to a temperature between 90°C and 120°C for a period of e.g. 4 minutes or less, depending on the oven type used, and then be cooled down again to normal room temperature or lees before removal from the shaping tool 20. If this process is performed by the audiologist, it may conveniently be performed by means of heating in boiling water and subsequent cooling in cold tap water. In this case, the heating period would be shorter, e.g. less than 30 seconds.

These temperature values and times would also apply if a shaping tool in the form of a deformable wire is used. The wire being inserted into the lumen of the elongated member. The wire and elongated member then being suitably deformed, heated, cooled, before extraction of the deformable wire again.

The details of an exemplary tool 20 for shaping a deformable elongated object according to the invention will now be explained based on figs. 3a to 3f, showing the tool 20 from different angles.

As best seen in figs. 3a, 3b, 3e and 3f, the tool comprises a first holding means in the form of a generally cylindrical hole 21 for receiving a first end of the elongated member 3 comprising the generally cylindrical earplug attachment means 9. The cylindrical hole 21 has a longitudinal slit defined by edges 22, allowing the narrow part, i.e. the sound tube 4, of the elongated member 3 to be inserted sideways into the cylindrical hole 21. When the tube has been inserted in the cylindrical hole 21, the cylindrical earplug attachment means 9 may be pulled into the cylindrical hole along the axis thereof, until it abuts a shoulder 23 forming the transition to a narrower cylindrical part 24 having a diameter corresponding essentially to the external diameter of the sound tube 4. The shoulder 23 thus secures the position of the elongated member 3 in a direction along the longitudinal axis thereof. As can best be seen from fig. 3e, a recess 25 is formed in the side wall of the cylindrical hole 21. When the earplug attachment means 9 is pulled into the cylindrical hole 21, the recess 25 will receive the part in which the eyelet 11 is provided and secure the earplug attachment means 9 against rotation.

Thus secured, the elongated member may be twisted by an angle and placed in the positioning means. The actual angle will depend on the actual user's need, but would typically be approximately 90°. The positioning means comprise a first protrusion 26 having an undercut 27 and a second protrusion 28 having an undercut 29. The elongated member 3 is placed in the positioning means by being wrapped slightly around the first protrusion 26 and around the second protrusion 28, where it is in either case held laterally in the respective undercuts 27 or 29. The positioning means may further comprise a groove 30 in the transition between the narrower cylindrical part 24 and the undercut 27 under the first protrusion 26.

Following this, the hearing aid attachment means 13 is placed in a second holding means. The second holding means comprises a shallow recess 31 corresponding to the shape of either side of the hearing aid attachment means 13. Moreover the shallow recess 31 has a raised part or protrusion 32, adapted to engage the through passage 14 in the hearing aid attachment means 13. The engagement between the protrusion 32 and the passage 14 helps securing the hearing aid attachment means 13 laterally and longitudinally in the shallow recess 31.

The tool 20 furthermore comprises a third holding means for holding the strip 8. The third holding means comprises a curved groove 33. When the earplug attachment means 9 is placed in the cylindrical hole 21 with the protrusion comprising the eyelet 11 in place in the recess 25, the strip 8 will extend in a direction tangential to the groove 33. The strip may now be placed in the groove 33 so as to be tensioned against the outer wall thereof and protruding from the opening 34. It is held in place in the groove 34 by means of a protrusion 35, under which it is slipped when placed in the groove 34.

The strip 8 will thus also gain a predetermined shape when exposed to the heating and cooling treatment of the invention. This predetermined shape will indicate to the user, from which direction the strip 8 is to be introduced in the eyelet 11, in order to form an appropriate loop, as seen in fig. 1.

It should be noted that the above description has been given as examples. The skilled person will understand that numerous possible variations exist. Thus, the skilled person will know that e.g. the temperature ranges mentioned will depend on the actual materials from which the elongated member 3 is made and the time accepted for the material to set in the desired shape. Also, the materials selected for the tool 20 are preferred materials only. The skilled person will know that any material used in a rapid prototyping process, which is sufficiently durable to withstand the temperatures used in the shaping process may be suitable.

## Claims

1. A tool (20) suitable for shaping an elongated deformable member (3) having a first end and a second end and comprising a sound tube (4) for a hearing aid, wherein the tool (20) comprises a first holding means, **characterized in that** said first holding means comprises means for securing said first end of said elongated member against rotation about the longitudinal axis of the elongated member, said tool comprising a second holding means for holding a second end of the elongated member and positioning means comprising at least one protrusion for positioning and holding intermediate parts of said elongated member between said first end and said second end in a fixed desired shape and **in that** said tool has been manufactured using a rapid prototyping process.

2. A tool (20) according to claim 1, wherein the tool (20) is made of a plastic material.

3. A tool (20) according to claim 2, wherein the rapid prototyping process is a stereolithography process.

4. A tool (20) according to any one of claims 1 or 2, wherein the rapid prototyping process is a selective laser sintering process.

5. A tool (20) according to claim 3 or 4, wherein the tool (20) is made of a material selected from the group comprising acryl, epoxy, when the rapid prototyping process is a stereolithography process or polyamide, when the rapid prototyping process is a selective laser sintering process.

6. A tool according to any one of the preceding claims, wherein the tool is manufactured on the basis of recorded data concerning an individual's ear.

7. A tool (20) according to any one of the preceding claims, wherein the tool is adapted to shape an elongated object (3) having a predetermined length.

8. A tool (20) according to any one of the preceding claims, wherein the tool (20) is adapted to shape an elongated object (3) having a length selected among a number of predetermined lengths, said number being larger than one and preferably smaller than four.

9. Method for providing a tool (20) according to any of the claims 1 to 8 for shaping a deformable elongated member (3) comprising a sound tube (4) for a hearing aid, wherein the method comprises manufacture of the tool (20) by means of a rapid prototyping process, **characterized in that** said rapid prototyping process is a stereolithography process or a selective laser sintering process, and **in that** said rapid prototyping process involves the use of pre-recorded data about an individual's ear (2).

10. Method according to claims 9, wherein the tool is made of a plastic material selected from the group comprising acryl, epoxy and polyamide.

11. Method according to claim 9, wherein the pre-recorded data about the individual's ear (2) are obtained by laser scanning of the ear (2).

12. Method according to claim 9, wherein the pre-recorded data are obtained by laser scanning a cast of the user's ear (2).

13. Method according to claim 11 or 12, wherein the data obtained by the laser scanning is transmitted online to a manufacturing facility remote from the location where the scanning takes place.

14. Method for individually shaping an elongated deformable member (3) having a first end and a second end and comprising a sound tube (4) for a hearing aid to the individual characteristics of an individual's ear, said method being **characterized in** comprising the steps of
manufacturing a tool (20) according to any of the claims 1 to 8 suitable for shaping said elongated deformable member (3) through using a rapid prototyping process on the basis of pre-recorded data concerning an individual's ear (2),
placing the elongated member (3) in said tool (20),
heating and cooling said elongated member (3), and
removing the elongated member (3) from the tool.

## Patentansprüche

1. Werkzeug (20), das zum Formen eines länglichen verformbaren Elements (3) mit einem ersten Ende und einem zweiten Ende geeignet ist und das ein Schallrohr (4) für eine Hörhilfe umfasst, wobei das Werkzeug (20) ein erstes Haltemittel umfasst, **dadurch gekennzeichnet, dass** das erste Haltemittel Mittel zum Sichern des ersten Endes des länglichen Elements gegen eine Rotation um die Längsachse des länglichen Elements aufweist, wobei das Werkzeug ein zweites Haltemittel zum Halten eines zweiten Endes des länglichen Elements umfasst und ein Positionierungsmittel, das wenigstens einen Vorsprung zum Positionieren und Halten von Zwischenteilen des länglichen Elements zwischen dem ersten Ende und dem zweiten Ende in einer festen gewünschten Form umfasst, und dadurch, dass das Werkzeug unter Verwendung eines Rapid-Prototyping-Prozesses hergestellt worden ist.

2. Werkzeug (20) nach Anspruch 1, wobei das Werkzeug (20) aus einem Kunststoffmaterial hergestellt ist.

3. Werkzeug (20) nach Anspruch 2, wobei der Rapid-Prototyping-Prozess ein Stereolithographieprozess ist.

4. Werkzeug (20) nach einem der Ansprüche 1 oder 2, wobei der Rapid-Prototyping-Prozess ein selektiver Lasersinterprozess ist.

5. Werkzeug (20) nach Anspruch 3 oder 4, wobei das Werkzeug (20) aus einem Material hergestellt ist, das aus der Gruppe umfassend Acryl, Epoxid ausgewählt ist, wenn der Rapid-Prototyping-Prozess ein Stereolithographieprozess ist, oder Polyamid, wenn der Rapid-Prototyping-Prozess ein selektiver Lasersinterprozess ist.

6. Werkzeug nach einem der vorstehenden Ansprüche, wobei das Werkzeug auf der Basis von aufgezeichneten Daten bezüglich eines Ohrs eines Individuums hergestellt ist.

7. Werkzeug (20) nach einem der vorstehenden Ansprüche, wobei das Werkzeug dazu angepasst ist, ein längliches Objekt (3) mit einer vorbestimmten Länge zu formen.

8. Werkzeug (20) nach einem der vorhergehenden Ansprüche, wobei das Werkzeug (20) dazu angepasst ist, ein längliches Objekt (3) mit einer Länge zu formen, welche aus einer Anzahl vorbestimmter Längen ausgewählt ist, wobei die Anzahl größer als eins und vorzugsweise kleiner als vier ist.

9. Verfahren zum Bereitstellen eines Werkzeugs (20) nach einem der Ansprüche 1 bis 8 zum Formen eines verformbaren länglichen Elements (3), das ein Schallrohr (4) für eine Hörhilfe umfasst, wobei das Verfahren eine Herstellung des Werkzeugs (20) mittels eines Rapid-Prototyping-Prozesses umfasst, **dadurch gekennzeichnet, dass** der Rapid-Prototyping-Prozess ein Stereolithographieprozess oder ein selektiver Lasersinterprozess ist und dadurch, dass der Rapid-Prototyping-Prozess die Verwendung von vorab aufgezeichneten Daten über ein Ohr (2) eines Individuums beinhaltet.

10. Verfahren nach Anspruch 9, wobei das Werkzeug aus einem Kunststoffmaterial hergestellt wird, das aus der Gruppe umfassend Acryl, Epoxid und Polyamid ausgewählt ist.

11. Verfahren nach Anspruch 9, wobei die vorab aufgezeichneten Daten über das Ohr (2) des Individuums durch Laserabtastung des Ohrs (2) erhalten werden.

12. Verfahren nach Anspruch 9, wobei die vorab aufgezeichneten Daten durch Laserabtasten eines Abdrucks des Ohrs (2) des Benutzers erhalten werden.

13. Verfahren nach Anspruch 11 oder 12, wobei die durch das Laserabtasten erhaltenen Daten online zu einer Herstellungseinrichtung übertragen werden, die von dem Ort entfernt ist, an dem das Abtasten stattfindet.

14. Verfahren zum individuellen Formen eines länglichen verformbaren Elements (3) mit einem ersten Ende und einem zweiten Ende und das ein Schallrohr (4) für eine Hörhilfe umfasst, zu den individuellen Eigenschaften eines Ohrs eines Individuums, wobei das Verfahren **dadurch gekennzeichnet ist, dass** es die folgenden Schritte umfasst
Herstellen eines Werkzeugs (20) nach einem der Ansprüche 1 bis 8, das zum Formen des länglichen verformbaren Elements (3) geeignet ist, unter Verwendung eines Rapid-Prototyping-Prozesses auf der Basis von vorab aufgezeichneten Daten bezüglich eines Ohrs (2) eines Individuums,
Anordnen des länglichen Elements (3) in dem Werkzeug (20),
Erwärmen und Abkühlen des länglichen Elements (3) und
Entfernen des länglichen Elements (3) aus dem Werkzeug.

## Revendications

1. Outil (20) convenant au façonnage d'un élément allongé déformable (3) ayant une première extrémité et une seconde extrémité et comprenant un tube sonore (4) pour une prothèse auditive, dans lequel l'outil (20) comprend un premier moyen de fixation, **caractérisé en ce que** ledit premier moyen de fixation comprend un moyen pour fixer ladite première extrémité dudit élément allongé contre une rotation autour de l'axe longitudinal de l'élément allongé, ledit outil comprenant un second moyen de fixation pour soutenir une seconde extrémité de l'élément allongé et un moyen de positionnement comprenant au moins une saillie pour positionner et maintenir des parties intermédiaires dudit élément allongé entre ladite première extrémité et ladite seconde extrémité selon une forme fixe souhaitée et ledit outil a été fabriqué en utilisant un procédé de prototypage rapide.

2. Outil (20) selon la revendication 1, dans lequel l'outil (20) est constitué d'une matière plastique.

3. Outil (20) selon la revendication 2, dans lequel le procédé de prototypage rapide est un procédé de stéréolithographie.

4. Outil (20) selon l'une quelconque des revendications 1 ou 2, dans lequel le procédé de prototypage rapide est un procédé de frittage sélectif au laser.

5. Outil (20) selon la revendication 3 ou 4, dans lequel l'outil (20) est constitué d'un matériau choisi dans le groupe comprenant un produit acrylique, une résine époxyde lorsque le procédé de prototypage rapide est un procédé de stéréolithographie, ou un polyamide lorsque le procédé de prototypage rapide est un procédé de frittage sélectif au laser.

6. Outil selon l'une quelconque des revendications précédentes, dans lequel l'outil est fabriqué sur la base de données enregistrées concernant l'oreille d'un individu.

7. Outil (20) selon l'une quelconque des revendications précédentes, dans lequel l'outil est à même de façonner un élément allongé (3) ayant une longueur prédéterminée.

8. Outil (20) selon l'une quelconque des revendications précédentes, dans lequel l'outil (20) est à même de façonner un objet allongé (3) ayant une longueur choisie parmi un certain nombre de longueurs prédéterminées, ledit nombre étant plus grand que un et de préférence plus petit que quatre.

9. Procédé de fourniture d'outil (20) selon l'une quelconque des revendications 1 à 8, pour façonner un élément allongé déformable (3) comprenant un tube sonore (4) pour une prothèse auditive, dans lequel le procédé comprend la fabrication de l'outil (20) au moyen d'un procédé de prototypage rapide, **caractérisé en ce que** ledit procédé de prototypage rapide est un procédé de stéréolithographie ou un procédé de frittage sélectif au laser et ledit procédé de prototypage rapide implique l'utilisation de données préenregistrées sur l'oreille (2) d'un individu.

10. Procédé selon la revendication 9, dans lequel l'outil est constitué d'une matière plastique choisie dans le groupe comprenant un produit acrylique, une résine époxyde et un polyamide.

11. Procédé selon la revendication 9, dans lequel les données préenregistrées sur l'oreille (2) de l'individu sont obtenues par balayage de l'oreille (2) au laser.

12. Procédé selon la revendication 9, dans lequel les données préenregistrées sont obtenues par balayage au laser d'un stéréotype de l'oreille (2) de l'utilisateur.

13. Procédé selon la revendication 11 ou 12, dans lequel les données obtenues par le balayage au laser sont transmises en ligne à une installation de fabrication distante de l'emplacement où le balayage a lieu.

14. Procédé de façonnage individuel d'un élément allongé déformable (3) ayant une première extrémité et une seconde extrémité et comprenant un tube sonore (4) pour une prothèse auditive selon les caractéristiques individuelles de l'oreille d'un individu, ledit procédé étant **caractérisé en ce qu'**il comprend les étapes consistant à :
fabriquer un outil (20) selon l'une quelconque des revendications 1 à 8 convenant au façonnage dudit élément allongé déformable (3) en utilisant un procédé de prototypage rapide sur la base de données préenregistrées concernant l'oreille (2) de l'individu,
placer l'élément allongé (3) dans ledit outil (20),
chauffer et refroidir ledit élément allongé (3) et
retirer l'élément allongé (3) de l'outil.
